# EUROPEAN PATENT APPLICATION

(11) **EP 4 803 491 A1**
(43) Date of publication of application: **09.09.2026**
(21) Application number: 26156044.5
(22) Date of filing: 03.02.2026
(51) Int. Cl.: C02F 1/72

(54) **TREATMENT APPARATUS FOR WASTEWATER AND METHOD FOR STARTING OR RESTARTING APPARATUS**

(30) Priority: 07.03.2025 JP 2025036073
(71) Applicant: Nippon Shokubai Co., Ltd., Osaka-shi, Osaka 541-0043 (JP)
(72) Inventor: KUMA, Ryoji, Himeji-shi, 671-1292 (JP)
(74) Representative: Crow, Martin

(57) **Abstract**

To provide a new treatment apparatus for wastewater and a method for starting or restarting the treatment apparatus that can maintain excellent treatment capacity for wastewater.

A treatment apparatus 10 includes a packed column 20 including a catalyst layer 22 packed with a solid catalyst 21, a discharge pipe 30 connected to an upper position relative to the catalyst layer, and a liquid supply unit 40 that can supply a liquid to a lower position relative to the catalyst layer. The liquid supply unit can supply either a first liquid 41 or a second liquid 42 having a COD(Cr) greater than the COD(Cr) of the first liquid.

## Description

### Technical Field

The present invention relates to a treatment apparatus for wastewater and a method for starting or restarting the apparatus.

### Background Art

Wastewater discharged from various industrial plants, such as chemical plants, food processing facilities, metal processing facilities, metal plating facilities, printing plate-making facilities, and photographic processing facilities, is purified by various methods such as wet oxidation (treatment), wet decomposition, ozone oxidation, and hydrogen peroxide oxidation.

As a treatment apparatus for wastewater, for example, an apparatus using a wet oxidation treatment method employing a reaction column (packed column) packed with a solid catalyst, such as that described in Patent Document 1, is known. Here, the wet oxidation treatment method is a treatment method that decomposes organic substances in a liquid by using oxygen or an oxidizing agent under high-temperature and high-pressure conditions, and the solid catalyst is used to increase treatment efficiency.

Incidentally, in the case of a treatment apparatus for wastewater using the solid catalyst, it is known that when operation of the apparatus continues, the treatment capacity for wastewater decreases, and the main cause is considered to be degradation of the solid catalyst. Various factors cause degradation of the solid catalyst, and examples include adhesion of organic components contained in the wastewater and substances generated by conversion inside a reactor to a surface of the solid catalyst. In contrast, in Patent Document 1, adhesion of organic components to the solid catalyst is prevented by previously separating adhesive organic components by membrane filtration.

Other degradation factors include wear, collapse, and the like of the solid catalyst caused by movement and vibration and other motions of the solid catalyst inside a catalyst layer due to action of the wastewater and oxygen-containing gas introduced into the reaction column. In contrast, in Patent Document 2, the solid catalyst is physically pressed by a pressing means such as a grid or a wire mesh to suppress motion of the solid catalyst, whereby degradation of the solid catalyst due to wear, collapse, or the like is prevented, leading to prevention of a decrease in treatment performance of the solid catalyst.

Further, it is known that depending on a method of using the treatment apparatus for wastewater, the state of the solid catalyst is changed by motion or the like, decreasing treatment performance of the solid catalyst as in the case described above. As in Patent Document 2, the decrease in treatment performance of the solid catalyst can be prevented by physically pressing the solid catalyst.

### Citation List

### Patent Literature

Patent Document 1: JP 2003-266087 A
Patent Document 2: JP 5330751 B

### Summary of Invention

### Technical Problem

However, although the means such as those in Patent Document 1 and Patent Document 2 provide a certain suppressing effect against a decrease in treatment performance that is caused by adhesion of organic components to the solid catalyst or motion or the like of the solid catalyst, an apparatus that can prevent a decrease in the treatment performance more effectively is demanded. In addition, there is also a problem that a means such as that in Patent Document 2 cannot prevent a decrease in the treatment performance due to factors other than the motion of the solid catalyst.

The present invention has been made in view of the above circumstances, and an object of the present invention is to provide a new treatment apparatus for wastewater that can maintain treatment capacity for wastewater and to provide a method for starting or restarting the treatment apparatus.

### Solution to Problem

The inventor of the present invention and others have conducted intensive studies in order to solve the above problem. As a result, the present invention has been completed by finding that the object of the present invention can be achieved by a treatment apparatus including a predetermined discharge pipe and a liquid supply unit and by a method for starting and a method for restarting the treatment apparatus including a step of supplying a predetermined liquid.

The above object can be achieved by the present invention having the following configurations, and the present invention includes the following aspects and embodiments.

One aspect of the present invention is:
1. A treatment apparatus including a packed column including a packed column including a catalyst layer packed with a solid catalyst; a discharge pipe connected to an upper position relative to the catalyst layer; and a liquid supply unit located at a lower position relative to the catalyst layer and configured to supply either a first liquid or a second liquid having a greater COD(Cr) than the first liquid.
2. In the treatment apparatus according to item 1, the treatment apparatus preferably further includes a pressure-boosting gas supply unit configured to supply, to the packed column, a pressure-boosting gas for increasing an internal pressure of the packed column, in which the pressure-boosting gas supply unit supplies the pressure-boosting gas to an upper position relative to the catalyst layer through the discharge pipe.
3. In the treatment apparatus according to item 2, the treatment apparatus preferably further includes a gas supply unit configured to supply an oxygen-containing gas to a lower position relative to the catalyst layer; and a switching unit configured to switch between supplying the pressure-boosting gas to the upper position relative to the catalyst layer by the pressure-boosting gas supply unit and supplying the oxygen-containing gas to the lower position relative to the catalyst layer by the gas supply unit.
4. In the treatment apparatus according to item 3, in which the liquid supply unit preferably supplies either the first liquid or the second liquid in a state with the oxygen-containing gas being supplied by the gas supply unit.
5. In the treatment apparatus according to item 3 or item 4, in which the pressure-boosting gas supply unit preferably supplies the same oxygen-containing gas as the oxygen-containing gas supplied by the gas supply unit as the pressure-boosting gas to the packed column.
6. In the treatment apparatus according to any one of items 1 to 5, the treatment apparatus preferably further includes a heater configured to heat the packed column.
7. In the treatment apparatus according to any one of items 1 to 6, the first liquid is preferably ion-exchanged water, pure water, ultrapure water, industrial water, well water, or tap water.
8. In the treatment apparatus according to any one of items 1 to 7, the solid catalyst preferably contains at least one selected from the group consisting of: one or more selected from the group consisting of titanium, iron, aluminum, silicon, and zirconium, or one or more selected from the group consisting of an oxide of any of titanium, iron, aluminum, silicon, and zirconium, a composite oxide of any of titanium, iron, aluminum, silicon, and zirconium; and one or more selected from the group consisting of activated carbons.
9. In the treatment apparatus according to any one of items 1 to 8, the treatment apparatus is preferably used for wet oxidation treatment.

Another aspect of the present invention is:
10. A method for starting or restarting a treatment apparatus including a packed column including a catalyst layer packed with a solid catalyst, the method including first water-passing of supplying a first liquid to a lower position relative to the catalyst layer and causing the first liquid to pass through a discharge pipe connected to an upper position relative to the catalyst layer; and after the first water-passing, second water-passing of supplying a second liquid having a greater COD(Cr) than the first liquid to a lower position relative to the catalyst layer.
11. The method for starting or restarting a treatment apparatus, according to item 10 preferably further includes, before the first water-passing, pressure-boosting of supplying a pressure-boosting gas to an upper position relative to the catalyst layer through the discharge pipe and increasing an internal pressure of the packed column.
12. The method for starting or restarting a treatment apparatus, according to item 11, in which, in the pressure-boosting, after the internal pressure of the packed column reaching a set pressure (P) by supplying the pressure-boosting gas to the upper position relative to the catalyst layer, switching to supplying an oxygen-containing gas to a lower position relative to the catalyst layer is preferably performed.
13. The method for starting or restarting a treatment apparatus, according to item 12, in which, in the first water-passing, the first liquid is preferably supplied in a state with the oxygen-containing gas being supplied to a lower position relative to the catalyst layer, and in the second water-passing, the second liquid is preferably supplied in a state with the oxygen-containing gas being supplied to the lower position relative to the catalyst layer.
14. The method for starting or restarting a treatment apparatus, according to item 12 or 13, in which, in the pressure-boosting, the same oxygen-containing gas as the oxygen-containing gas is preferably supplied as the pressure-boosting gas to the packed column.
15. The method for starting or restarting a treatment apparatus, according to any one of items 10 to 14 preferably further includes, after the first water-passing and before the second water-passing, temperature-increasing of heating the packed column in a state with the first liquid passing through the discharge pipe.
16. The method for starting or restarting a treatment apparatus, according to any one of items 10 to 15, in which the first liquid is preferably ion-exchanged water, pure water, ultrapure water, industrial water, well water, or tap water.
17. The method for starting or restarting a treatment apparatus, according to any one of items 10 to 16, in which the solid catalyst preferably contains at least one selected from the group consisting of: one or more selected from the group consisting of titanium, iron, aluminum, silicon, and zirconium, or one or more selected from the group consisting of an oxide of any of titanium, iron, aluminum, silicon, and zirconium, a composite oxide of any of titanium, iron, aluminum, silicon, and zirconium; and one or more selected from the group consisting of activated carbons.
18. The method for starting or restarting a treatment apparatus, according to any one of items 10 to 17, in which the method is preferably used for wet oxidation treatment.

### Advantageous Effects of Invention

According to the present invention, a new treatment apparatus for wastewater that can maintain treatment capacity for wastewater and a method for starting or restarting the treatment apparatus can be provided.

### Brief Description of Drawings

FIG. 1 is a schematic diagram illustrating a treatment apparatus according to an embodiment.
FIG. 2 is a schematic diagram illustrating a packed column of FIG. 1.

### Description of Embodiments

Hereinafter, embodiments of the present invention will be described in detail with reference to the accompanying drawings. The embodiments described herein are examples for embodying the technical concept of the present invention, and do not limit the present invention. Therefore, other practical forms, examples (test examples), operational techniques, and the like that can be conceived by those skilled in the art without departing from the gist of the present invention are all included in the scope and gist of the present invention, and are included in the invention described in the claims and the scope of equivalents thereof.

In addition, in the drawings attached to the present specification may, for convenience of illustration and ease of understanding, be schematically expressed with scales, vertical and horizontal dimensional ratios, shapes, and the like being changed as appropriate from actual ones, and the drawings are merely examples and do not limit interpretation of the present invention.

In addition, throughout the present specification, it is to be understood that expressions in a singular form also include concepts in a plural form unless otherwise stated. Therefore, it is to be understood that an article for a singular form (for example, "a", "an", and "the" in the case of English) includes a concept of a plural form thereof, unless otherwise stated. Also, it is to be understood that the terms used herein are used in their ordinary meanings in the art, unless otherwise specified. Accordingly, unless defined otherwise, all technical terms and scientific terms used herein have the same meanings as those commonly understood by those skilled in the art to which the present invention belongs. In case of conflict, the present specification (including definitions) is prior.

Note that, in the present specification, ordinal numbers such as "first" and "second" may be attached. However, unless otherwise specifically described regarding these ordinal numbers, the ordinal numbers are provided for convenience of explanation to identify components and do not specify number or order.

### Embodiment

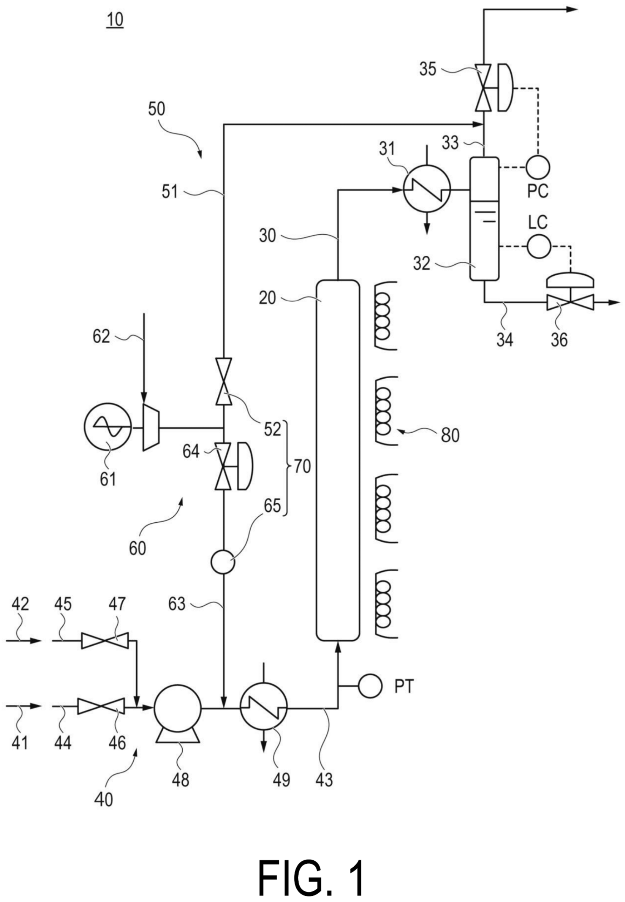

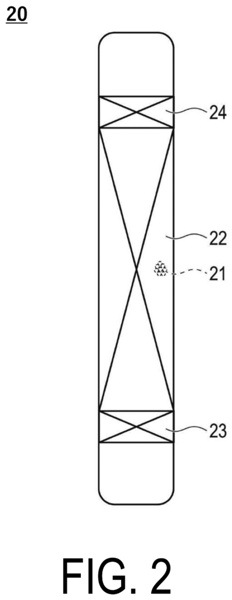

As illustrated in FIG. 1 and FIG. 2, a treatment apparatus 10 of the embodiment, in outline, includes a packed column 20 including a catalyst layer 22 packed with a solid catalyst 21, a discharge pipe 30 connected to an upper position relative to the catalyst layer 22, and a liquid supply unit 40 that can supply either a first liquid 41 or a second liquid 42 to a lower position relative to the catalyst layer 22. The second liquid 42 is a liquid to be treated. The second liquid 42 has COD(Cr) greater than the COD(Cr) of the first liquid 41.

The treatment apparatus 10 further includes a pressure-boosting gas supply unit 50 that supplies a pressure-boosting gas to the packed column 20 for increasing the internal pressure of the packed column 20. The pressure-boosting gas supply unit 50 supplies the pressure-boosting gas to an upper position relative to the catalyst layer 22 through the discharge pipe 30.

The treatment apparatus 10 further includes a gas supply unit 60 that supplies an oxygen-containing gas and a switching unit 70 at a lower position relative to the catalyst layer 22. The switching unit 70 can switch between supplying the pressure-boosting gas to an upper position relative to the catalyst layer 22 by the pressure-boosting gas supply unit 50 and supplying the oxygen-containing gas to a lower position relative to the catalyst layer 22 by the gas supply unit 60.

The following describes the treatment apparatus 10 in detail.

The treatment apparatus 10 of the embodiment is preferably used for wet oxidation treatment.

The first liquid 41 may be any liquid having COD(Cr) smaller than the COD(Cr) of the second liquid 42. Specifically, the first liquid 41 may be exemplified by ion-exchanged water, pure water, ultrapure water, industrial water, well water, and tap water.

The first liquid 41 may be a liquid in which the second liquid 42 to be treated is not mixed, or may be a liquid in which the second liquid 42 to be treated is mixed. That is, the first liquid 41 may be a liquid obtained by diluting the second liquid 42. Note that, in the following description, for convenience, the second liquid 42 may be referred to as "wastewater" to be treated, and the first liquid 41 may be referred to as "non-wastewater".

The liquid supply unit 40 can supply either the first liquid 41 or the second liquid 42. Accordingly, when the treatment apparatus 10 is started or restarted, an operation mode can be implemented, for example, in which non-wastewater (the first liquid 41) is circulated through the catalyst layer 22 of the packed column 20 and then wastewater (the second liquid 42) is circulated.

The packed column 20 includes a packing layer 23 and a packing layer 24 respectively provided at a lower part and an upper part of the catalyst layer 22 (see FIG. 2). The packing layer 23 and the packing layer 24 have a function of holding the catalyst layer 22. The packing layer 23 and the packing layer 24 are packed with, for example, SUS balls.

The packed column 20 includes a supply pipe 43 connected to a lower position relative to the catalyst layer 22. To the supply pipe 43, a first pipe 44 for introducing the first liquid 41 and a second pipe 45 for introducing the second liquid 42 are connected. The first pipe 44 is provided with a first open/close valve 46, and the second pipe 45 is provided with a second open/close valve 47. The supply pipe 43 is provided with a pump 48 for pressure-feeding the first liquid 41 or the second liquid 42, a first heater 49 constituted by a heat exchanger, and a temperature controller PT that detects a temperature of a fluid (liquid and/or gas) supplied to the packed column 20. The fluid (liquid and/or gas) supplied to the packed column 20 is heated to a predetermined temperature by the first heater 49.

The discharge pipe 30 is provided with a cooler 31 constituted by a heat exchanger and a gas-liquid separator 32. The fluid (liquid and/or gas) discharged from the packed column 20 is cooled to a predetermined temperature by the cooler 31. The gas-liquid separator 32 includes a third pipe 33 connected to a region in which a separated gas is present, a fourth pipe 34 connected to a region in which a separated liquid is present, a pressure controller PC that detects the pressure of the separated gas, and a liquid level controller LC that detects the liquid level height of the separated liquid. The third pipe 33 is provided with a pressure control valve 35 that adjusts a gas pressure in the gas-liquid separator 32. The fourth pipe 34 is provided with a liquid level control valve 36 that adjusts the liquid level height in the gas-liquid separator 32. The gas separated in the gas-liquid separator 32 is discharged toward a device (not illustrated) through the third pipe 33. The liquid separated in the gas-liquid separator 32 is discharged toward a device (not illustrated) through the fourth pipe 34.

The treatment apparatus 10 includes a compressor 61 that compresses an oxygen-containing gas (for example, air), a fifth pipe 62 that introduces the oxygen-containing gas into the compressor 61, a sixth pipe 63 that introduces the compressed oxygen-containing gas into the supply pipe 43, and a seventh pipe 51 that introduces the compressed oxygen-containing gas into the third pipe 33 of the gas-liquid separator 32. The sixth pipe 63 is connected to the supply pipe 43 between the pump 48 and the first heater 49. The seventh pipe 51 is connected to the third pipe 33 between the gas-liquid separator 32 and the pressure control valve 35. The sixth pipe 63 is provided with a flow rate control valve 64 and a shut-off valve 65. The shut-off valve 65 is provided at a downstream-side position of the flow rate control valve 64. The seventh pipe 51 is provided with an open/close valve 52. When the shut-off valve 65 is opened and the open/close valve 52 is closed, the flow rate of the compressed oxygen-containing gas is controlled by the flow rate control valve 64, and the compressed oxygen-containing gas flows through the sixth pipe 63 and the supply pipe 43 and is supplied to a lower position relative to the catalyst layer 22 of the packed column 20. When the shut-off valve 65 is closed and the open/close valve 52 is opened, the compressed oxygen-containing gas flows through the seventh pipe 51, the third pipe 33, the gas-liquid separator 32, and the discharge pipe 30, and is supplied to an upper position relative to the catalyst layer 22 of the packed column 20.

In the treatment apparatus 10 of the embodiment, the above-described "liquid supply unit 40" is constituted by the supply pipe 43, the first pipe 44, the second pipe 45, the first open/close valve 46, the second open/close valve 47, and the pump 48. The "pressure-boosting gas supply unit 50" is constituted by the compressor 61, the fifth pipe 62, the seventh pipe 51, the third pipe 33, the gas-liquid separator 32, and the discharge pipe 30. The "gas supply unit 60" is constituted by the compressor 61, the fifth pipe 62, the sixth pipe 63, and the supply pipe 43. The "switching unit 70" is configured by the shut-off valve 65 of the sixth pipe 63 and the open/close valve 52 of the seventh pipe 51.

The liquid supply unit 40 supplies either the first liquid 41 or the second liquid 42 in a state with the oxygen-containing gas being supplied by the gas supply unit 60.

The pressure-boosting gas supply unit 50 of the embodiment supplies, as the pressure-boosting gas, the oxygen-containing gas identical to the oxygen-containing gas supplied by the gas supply unit 60 to the packed column 20. With such a configuration, pressure-boosting of the pressure-boosting gas can be performed by a single compressor 61, and there is no need to add a compressor dedicated to the pressure-boosting gas. Since the pressure-boosting gas supply unit 50 can be formed only by adding a pipe and the open/close valve 52, the configuration of the apparatus is simplified and is advantageous in terms of cost. Note that the present invention does not exclude using a gas other than the oxygen-containing gas, such as inert gas, as the pressure-boosting gas. Needless to say, an appropriate gas for the content of the treatment can be used as the pressure-boosting gas.

The treatment apparatus 10 may further include a second heater 80 (corresponding to a heater) that heats the packed column 20. The second heater 80 is constituted by a heater. By heating the packed column 20 by the second heater 80, setting of temperature conditions in normal operation and setting of temperature conditions when the treatment apparatus 10 is started or restarted can be easily performed. Note that the second heater 80 is not limited to an external heating type disposed outside the packed column 20 as illustrated. As the second heater 80, an internal heating type heater disposed inside the packed column 20 can also be used.

The material of the portion that comes into contact with a high-temperature liquid or gas in a reactor or the like (for example, a packed column, a pipe, or the like) is not particularly limited as long as the material ordinarily used is employed, and, for example, a metal material is preferable, and representative examples include iron, copper, stainless steel, Hastelloy, Inconel, titanium, and zirconium. Among them, stainless steel, Hastelloy, Inconel, and titanium are preferable, and stainless steel and titanium are particularly preferable. Note that, depending on the treatment conditions for the wastewater, glass or resin may be used.

Next, a method for starting or restarting a treatment apparatus 10 according to another embodiment will be described in accordance with procedures. The method is a method for starting or restarting the treatment apparatus 10 including a packed column 20 including a catalyst layer 22 packed with a solid catalyst, and includes a first water-passing step of supplying a first liquid to a lower position relative to the catalyst layer 22 and causing the first liquid to pass through a discharge pipe 30 connected to an upper position relative to the catalyst layer 22, and a second water-passing step of supplying a second liquid, COD(Cr) of the second liquid being greater than the COD(Cr) of the first liquid, to a lower position relative to the catalyst layer 22 after the first water-passing step. The method for starting or restarting the treatment apparatus 10 is suitably used for wet oxidation treatment.

### Pressure-Boosting Step

First, a pressure-boosting gas is supplied to an upper position relative to the catalyst layer 22 through the discharge pipe 30, and an internal pressure of the packed column 20 is increased. This step is performed before the first water-passing step. Note that, as a solid catalyst 21 included in the catalyst layer 22, the solid catalysts described in "Solid Catalyst" can preferably be used.

When the pressure-boosting gas is supplied to a lower position relative to the catalyst layer 22, the following problems occur. When the treatment apparatus 10 is started up for the first time in a state where no liquid is present in the packed column 20, the solid catalyst 21 in the catalyst layer 22 floats and moves. This causes the solid catalyst 21 to wear and collapse. In addition, after the treatment apparatus 10 is stopped, when the treatment apparatus 10 is restarted in a state where liquid remains in the packed column 20, huge bubbles are generated and an impact is applied to the solid catalyst 21. This causes the solid catalyst 21 to wear and collapse. On the other hand, when the pressure-boosting gas is supplied to an upper position relative to the catalyst layer 22, the solid catalyst 21 in the catalyst layer 22 does not float and move and is not subjected to an impact by the huge bubbles. This reduces damage to the solid catalyst 21 and suppresses a decrease in activity.

In the pressure-boosting step, the required time from starting inflow of the pressure-boosting gas into the catalyst layer 22 to reaching the target pressure is preferably 60 minutes or more, more preferably 80 minutes or more, and still more preferably 85 minutes or more. In addition, the upper limit of the required time is not particularly limited, but is preferably 180 minutes or less, more preferably 150 minutes or less, still more preferably 120 minutes or less, particularly preferably less than 120 minutes, and most preferably 110 minutes or less. For example, the required time from starting inflow of the pressure-boosting gas into the catalyst layer 22 to reaching the target pressure may be 60 minutes or more and 180 minutes or less, 60 minutes or more and 150 minutes or less, 60 minutes or more and 120 minutes or less, 60 minutes or more and less than 120 minutes, 60 minutes or more and 110 minutes or less, 80 minutes or more and 180 minutes or less, 80 minutes or more and 150 minutes or less, 80 minutes or more and 120 minutes or less, 80 minutes or more and less than 120 minutes, 80 minutes or more and 110 minutes or less, 85 minutes or more and 180 minutes or less, 85 minutes or more and 150 minutes or less, 85 minutes or more and 120 minutes or less, 85 minutes or more and less than 120 minutes, or 85 minutes or more and 110 minutes or less. Note that, in the case of increasing the pressure from a supply port side of the packed column 20, the required time is preferably 120 minutes or more. By the required time being within the above range, damage to the solid catalyst can be reduced and a decrease in activity can be suppressed.

In the pressure-boosting step, after the internal pressure of the packed column 20 reaches the set pressure (P) by supplying the pressure-boosting gas to an upper position relative to the catalyst layer 22, switching to supply of the oxygen-containing gas to a lower position relative to the catalyst layer 22 is performed. In this case, the set pressure (P) is preferably from 0.2 MPaG to 20 MPaG, more preferably from 1 MPaG to 20 MPaG, still more preferably from 3 MPaG to 10 MPaG, and particularly preferably from 4 MPaG to 9 MPaG. Note that G is an abbreviation for gauge.

With this configuration, even when switching to supply of the oxygen-containing gas to a lower position relative to the catalyst layer 22, the solid catalyst 21 inside the catalyst layer 22 does not float and move and is not subjected to an impact by the huge bubbles. This reduces damage to the solid catalyst and suppresses a decrease in activity.

The set pressure (P) at the time of switching does not have to be the same as the final pressure during steady operation. For example, the set pressure (P) is set to 6 MPaG (gauge pressure, the same applies to the following), and after the internal pressure of the packed column 20 reaches 6 MPaG, switching to supply of the oxygen-containing gas to a lower position relative to the catalyst layer 22 is performed. Thereafter, pressure-boosting can be gradually performed up to, for example, 7 MPaG, which is the final pressure during steady operation.

In the pressure-boosting step, the oxygen-containing gas identical to the oxygen-containing gas is supplied to the packed column 20 as the pressure-boosting gas. With such a configuration, as described above, pressure-boosting of the pressure-boosting gas can be performed by a single compressor 61, the configuration of the apparatus is simplified and is advantageous in terms of cost.

The flow rate of the oxygen-containing gas supplied to the packed column 20 in the pressure-boosting step is preferably from 0.1 to 10, more preferably from 0.5 to 5, and still more preferably from 0.7 to 3, in terms of O₂/COD(Cr) (amount of oxygen in the oxygen-containing gas/chemical oxygen demand). By the flow rate of the oxygen-containing gas being within the above range, damage to the solid catalyst can be reduced and a decrease in activity can be suppressed.

### First Water-Passing Step

Next, the first liquid 41 is supplied to a lower position relative to the catalyst layer 22, and a first liquid 41 is caused to pass through the discharge pipe 30 connected to an upper position relative to the catalyst layer 22. In this case, the required time from the start of supplying the first liquid 41 to a state in which the packed column 20 is filled with the first liquid 41 and the first liquid 41 passes through a discharge pipe 30 is preferably 20 minutes or more, more preferably 30 minutes or more, and still more preferably 35 minutes or more. In addition, the required time is preferably 180 minutes or less and more preferably 120 minutes or less. For example, the required time may be 20 minutes or more and 180 minutes or less, 20 minutes or more and 120 minutes or less, 30 minutes or more and 180 minutes or less, 30 minutes or more and 120 minutes or less, 35 minutes or more and 180 minutes or less, or 35 minutes or more and 120 minutes or less. By the required time being within the above range, a decrease in the treatment capacity of the wastewater treatment can be prevented more effectively. Note that, as the first liquid 41, the liquid described for the "Treatment apparatus 10" can be suitably used. Here, as the first liquid 41, the liquid described in the "First Liquid" can be suitably used.

In the first water-passing step, liquid hourly space velocity (LHSV) of the first liquid 41 in the catalyst layer 22 is preferably from 0.1 hr⁻¹ to 10 hr⁻¹, and more preferably from 0.5 hr⁻¹ to 5 hr⁻¹. By the flow rate of the first liquid 41 being within the above range, damage to the solid catalyst can be reduced and a decrease in activity can be suppressed.

In the first water-passing step, the first liquid 41 is supplied in a state with the oxygen-containing gas being supplied to a lower position relative to the catalyst layer 22.

After the internal pressure of the packed column 20 is increased, when the first liquid 41 is introduced in a state with supply and discharge of the oxygen-containing gas being shut off, further pressurization of the interior of the packed column 20 and the like occurs. Therefore, increasing the pressure resistance of the apparatus is required. On the other hand, when the first liquid 41 is introduced in a state with the oxygen-containing gas being supplied, that is, in a state with the oxygen-containing gas flowing through the interior of the packed column 20, excessive pressurization of the interior of the packed column 20 and the like does not occur. Therefore, there is no need to increase the pressure resistance of the apparatus more than necessary.

The flow rate of the oxygen-containing gas supplied to the catalyst layer 22 in the first water-passing step is preferably from 0.1 to 10, more preferably from 0.5 to 5, and even more preferably from 0.7 to 3, in terms of O₂/COD(Cr) (amount of oxygen in the oxygen-containing gas/chemical oxygen demand). A decrease in the treatment capacity of the wastewater treatment can be more effectively prevented by the flow rate of the oxygen-containing gas being within the above range.

In addition, a pressure inside the packed column 20 in the first water-passing step is preferably from 0.2 MPaG to 20 MPaG, more preferably from 1 MPaG to 20 MPaG, still more preferably from 3 MPaG to 10 MPaG, and particularly preferably from 4 MPaG to 9 MPaG. A decrease in the treatment capacity of the wastewater treatment can be more effectively prevented by the pressure inside the packed column 20 being within the above range.

### Temperature-Increasing Step

After the first water-passing step and before a second water-passing step described below, the packed column 20 is heated in a state where the first liquid 41 passes through the discharge pipe 30.

In the temperature-increasing step, the first liquid 41 is heated by the first heater 49, and the packed column 20 is heated from outside by the second heater 80. By providing the temperature-increasing step, the temperature condition when the treatment apparatus 10 is started or restarted can be easily set.

In the temperature-increasing step, the temperature inside the packed column 20 is preferably from 80°C to 400°C, and more preferably from 200°C to 300°C. By the highest temperature inside the packed column 20 being within the above range, the treatment capacity for a second liquid 42 in the second water-passing step described below becomes more excellent.

In the temperature-increasing step, the pressure inside the packed column 20 is preferably from 0.2 MPaG to 1 MPaG when the treatment temperature is 95°C or more and less than 170°C, and the pressure inside the packed column 20 is preferably from 1 MPaG to 5 MPaG when the treatment temperature is 170°C or more and less than 230°C.

In addition, when the treatment temperature is 230°C or more, a pressure greater than 5 MPaG is preferable. As the upper limit of the pressure when the treatment temperature is 230°C or more, the pressure is not particularly limited but is preferably 21 MPaG or less, more preferably 10 MPaG or less, and still more preferably 8 MPaG or less. For example, when the treatment temperature is 230°C or more and 400°C or less, the pressure may be greater than 5 MPaG and 21 MPaG or less. In addition, when the treatment temperature is 230°C or more and 400°C or less, the pressure may be greater than 5 MPaG and 10 MPaG or less. In addition, when the treatment temperature is 230°C or more and 400°C or less, the pressure may be greater than 5 MPaG and 8 MPaG or less. In addition, when the treatment temperature is 230°C or more, the upper limit of the pressure may be 2 times or less the saturated vapor pressure at the temperature of wastewater in the catalyst layer, and may be 1.5 times or less the saturated vapor pressure. For example, the upper limit of the pressure may be 1 time or more and 2 times or less the saturated vapor pressure, or may be 1 time or more and 1.5 times or less the saturated vapor pressure. By the internal pressure of the packed column 20 being in the above range, the wastewater in the reactor can maintain a liquid phase, and a decrease in the treatment capacity of the wastewater treatment can be more effectively prevented. Note that the upper limit of the pressure in the range of the above treatment temperature is an approximate value, and the upper limit may be determined based on the balance between the treatment efficiency and the pressure resistance of the apparatus.

### Second Water-Passing Step

After the first water-passing step, the second liquid 42 having the COD(Cr) greater than the COD(Cr) of the first liquid 41 is supplied to a lower position relative to the catalyst layer 22. Here, as the second liquid 42, the liquids described in the "(Second Liquid)" can be suitably used.

By performing the second water-passing step of supplying the second liquid 42 after the first water-passing step, the treatment capacity for wastewater can be improved, and further, a decrease in the treatment capacity can be prevented. This is considered to be because, compared with a case in which the second liquid 42 (wastewater) is supplied to the catalyst layer 22 first, supplying the first liquid 41 to the catalyst layer 22 first can prevent deterioration caused by adhesion of organic components in the wastewater to the catalyst.

In the second water-passing step, the liquid hourly space velocity (LHSV) of the second liquid 42 in the catalyst layer 22 is preferably from 0.1 hr⁻¹ to 10 hr⁻¹, and more preferably from 0.5 hr⁻¹ to 5 hr⁻¹. With the LHSV of the second liquid 42 in the catalyst layer 22 being within the above range, the excellent treatment capacity for wastewater can be maintained for a longer period.

In the second water-passing step, the second liquid 42 is supplied in a state with the oxygen-containing gas being supplied to a lower position relative to the catalyst layer 22.

As in the first water-passing step, when the second liquid 42 is introduced in a state with the oxygen-containing gas being supplied, that is, in a state with the oxygen-containing gas flowing through the packed column 20, excessive pressurization of the interior of the packed column 20 does not occur. In other words, when the second liquid 42 is introduced in a state with the oxygen-containing gas not being supplied, there is a concern that excessive pressurization of the interior of the packed column 20 might occur. Therefore, by maintaining a state in which the oxygen-containing gas is flowing, there is no need to increase pressure resistance of the apparatus more than necessary. Here, it is preferable that, also in the first water-passing step, the first liquid be supplied in a state with the oxygen-containing gas being supplied to a lower position relative to the catalyst layer 22, and that, also in the second water-passing step, the second liquid be supplied in a state with the oxygen-containing gas being supplied to a lower position relative to the catalyst layer 22. In that case, there is even less need to increase pressure resistance of the apparatus more than necessary.

Note that, the flow rate of the oxygen-containing gas supplied to the catalyst layer 22 described in the first water-passing step can be appropriately adopted as the flow rate of the oxygen-containing gas supplied to the catalyst layer 22 in the second water-passing step.

The pressure inside the packed column 20 in the second water-passing step is preferably from 0.2 MPaG to 20 MPaG, more preferably from 1 MPaG to 20 MPaG, still more preferably from 3 MPaG to 10 MPaG, and particularly preferably from 4 MPaG to 9 MPaG. A decrease in the treatment capacity of the wastewater treatment can be more effectively prevented by the pressure inside the packed column 20 being within the above range.

### Wastewater Treatment Step

After the second water-passing step is completed, the procedure proceeds to a wastewater treatment step. In the wastewater treatment step, the second liquid 42 is supplied from the supply port side of the packed column 20, and the second liquid 42 is subjected to wet oxidation treatment.

Note that the treated liquid after the wet oxidation treatment passes through a discharge pipe 30, is cooled by a cooler 31, and is subjected to gas-liquid separation treatment by a gas-liquid separator 32. In the gas-liquid separator 32, a liquid level is detected by a liquid level controller LC, and the liquid level is maintained constant by a liquid level control valve 36. The treated liquid is discharged from a fourth pipe 34.

In addition, during the wastewater treatment step, the pressure is detected by a pressure controller PC, and the pressure of the gas-liquid separator 32 and the pressure of the packed column 20 are maintained to be a final pressure in steady operation (for example, 7 MPaG) by a pressure control valve 35.

In the wastewater treatment step, the LHSV of the second liquid 42 in the catalyst layer 22 is the same as that in the above-described second water-passing step. Specifically, in the wastewater treatment step, the LHSV of the second liquid 42 in the catalyst layer 22 is preferably from 0.1 hr⁻¹ to 10 hr⁻¹, and more preferably from 0.5 hr⁻¹ to 5 hr⁻¹. With the LHSV of the second liquid 42 in the catalyst layer 22 being within the above range, the excellent treatment capacity for wastewater can be maintained for a longer period.

The pressure inside the packed column 20 in the wastewater treatment step is preferably from 0.2 MPaG to 20 MPaG, more preferably from 1 MPaG to 20 MPaG, still more preferably from 3 MPaG to 10 MPaG, and particularly preferably from 4 MPaG to 9 MPaG. A decrease in the treatment capacity of the wastewater treatment can be more effectively prevented by the pressure inside the packed column 20 being within the above range.

Hereinafter, more details will be described for some members and the like that constitute the treatment apparatus for wastewater according to the present invention and a method for starting or restarting the apparatus.

### Solid Catalyst

The solid catalyst 21 can be used without particular limitation as long as the solid catalyst 21 is generally used for the wastewater treatment. Among those, from the viewpoint of having excellent treatment performance, the solid catalyst 21 preferably contains at least one selected from the group consisting of: one or more selected from the group consisting of titanium, iron, aluminum, silicon, and zirconium, or one or more selected from the group consisting of an oxide of any of titanium, iron, aluminum, silicon, and zirconium, a composite oxide of any of titanium, iron, aluminum, silicon, and zirconium; and one or more selected from the group consisting of activated carbons, and more preferably contains one or more selected from the group consisting of titanium, iron, aluminum, silicon, zirconium, oxides thereof and composite oxides thereof.

The solid catalyst 21 may contain, in addition to the above component (also referred to as a first component), another component different from the above component (also referred to as a second component). As the second component, at least one metal selected from manganese, cobalt, nickel, tungsten, copper, cerium, silver, platinum, palladium, rhodium, gold, iridium, ruthenium, and the like, or a metal compound thereof, is used. In such a catalyst containing the second component, the first component is preferably used at a ratio from 75 wt.% to 99.95 wt.%, and the second component is preferably used at a ratio from 25 wt.% to 0.05 wt.%. By using the solid catalyst 21 as described above, a more excellent wastewater treatment effect can be obtained.

In addition, the shape of the solid catalyst 21 is not particularly limited, and a solid catalyst having a shape normally used for the wastewater treatment is used. Normally, a solid catalyst having a spherical, pellet, or ring shape is used, or a solid catalyst having a honeycomb shape may be used. When the shape of the solid catalyst 21 is a pellet shape, the diameter thereof is preferably from 1 mm to 10 mm and the length thereof is preferably from 2 mm to 12 mm, and the diameter thereof is more preferably from 2 mm to 8 mm and the length thereof is more preferably from 4 mm to 10 mm. Here, the pellet shape is preferably a cylindrical shape. By the solid catalyst 21 having the above shape, a more excellent wastewater treatment effect can be obtained.

### COD(Cr)

In the present specification, COD is an abbreviation for chemical oxygen demand and is an index indicating an amount of organic substances in water. COD (Cr) is one type of COD and indicates an amount of oxygen required for potassium dichromate to oxidize and/or decompose a target substance to be oxidized (for example, an organic compound or a nitrogen compound in the wastewater). The COD(Cr) can be measured by a known method, for example, and can be measured in accordance with the method described in Test Examples.

### First Liquid

The first liquid 41 may be any liquid having COD(Cr) smaller than the COD(Cr) of the second liquid 42, and as described above, it is preferable to use ion-exchanged water, pure water, ultrapure water, industrial water, well water, tap water, or the like. In addition, the COD(Cr) of the first liquid 41 is preferably 100 mg/L or less, more preferably 10 mg/L or less, still more preferably 5 mg/L or less, particularly preferably 1 mg/L or less, and most preferably 0 mg/L (equal to or less than the lower detection limit value of a COD analyzer). For example, the COD(Cr) of the first liquid 41 may be from 0 mg/L to 100 mg/L, may be from 0 mg/L to 10 mg/L, may be from 0 mg/L to 5 mg/L or less, or may be from 0 mg/L to 1 mg/L or less.

### Second Liquid

The second liquid 42 may be any liquid whose COD(Cr) is greater than the COD(Cr) of the first liquid 41, but the COD(Cr) is preferably from 1000 mg/L to 100000 mg/L, more preferably from 5000 mg/L to 100000 mg/L, and still more preferably from 10000 mg/L to 60000 mg/L. When the COD(Cr) of the first liquid 41 and the COD(Cr) of the second liquid 42 are each within the above range, effects of the present invention can be obtained more effectively.

### Oxygen-Containing Gas

In the present specification, the oxygen-containing gas refers to a gas containing molecular oxygen and/or ozone. Such a gas may include pure oxygen, an oxygen-enriched gas, air, a hydrogen peroxide solution, the oxygen-containing gas generated in another plant, and the like, and a type of the oxygen-containing gas is not particularly limited, but from an economic viewpoint, use of air among these is recommended.

The content of oxygen in the oxygen-containing gas is not particularly limited, but is preferably from 1 vol% to 100 vol%, more preferably from 5 vol% to 80 vol%, and still more preferably from 10 vol% to 50 vol%, in volume ratio ((a volume of oxygen/a volume of the oxygen-containing gas) × 100 (vol%)), with respect to the entire volume of the oxygen-containing gas.

Although the embodiments of the present invention have been described in detail above, the embodiments are descriptive and exemplary and are not limited, and it is apparent that the scope of the present invention is interpreted based on the appended claims.

### Test Examples

The effects of the present invention will be described with reference to the following test examples. However, the technical scope of the present invention is not limited only to the following test examples. Note that, in the following test examples, unless otherwise specified, operations were performed at room temperature (25°C). In addition, unless otherwise specified, "%" and "parts" mean "mass%" and "parts by mass", respectively.

The details of a packed column 20 (wet oxidation reactor) used in Test Example 1 are illustrated in FIG. 2. On a support seat formed of a grid and a wire mesh that was installed in the packed column 20 having a cylindrical shape with a diameter of 600 mm and a length of 10000 mm, SUS balls (with a diameter of 8.5 mm, spherical) were packed 100 mm in the height direction.

Next, 2000 liters of a solid catalyst 21 were packed 7074 mm in the height direction on a SUS ball layer, whereby the catalyst layer 22 was formed. The solid catalyst 21 used was a catalyst containing titania and platinum as main components, and the weight ratio of TiO₂ to Pt were 99.0 : 1.0. In addition, a shape of the solid catalyst was a pellet shape having a diameter of 4 mm and a length of 6 mm.

Then, on the catalyst layer 22, the same SUS balls as those described above were packed 300 mm in the height direction.

### Wastewater Treatment Test

A wastewater treatment test of a treatment apparatus 10 illustrated in FIG. 1 including the packed column 20 fabricated as described above was performed according to the following procedures.

### Test Example 1

In Test Example 1, the treatment apparatus 10 was started in accordance with the following procedures (1) to (4).

### (1) Pressure-boosting Step

Air was supplied from a fifth pipe 62 (oxygen-containing gas introduction line), and after pressure-boosting with a compressor 61, a shut-off valve 65 was closed and an open/close valve 52 was opened. Pressure-boosting was started through a seventh pipe 51 (compressed air charging line) from a treated water discharge line (discharge pipe 30) side of the packed column 20 at normal pressure. The pressure-boosting was performed by detecting a pressure with a pressure controller (PC) (pressure sensor) and actuating a pressure control valve 35 to maintain a pressure of 7 MPaG. The time required for the pressure-boosting at that time was 90 minutes. Note that G is an abbreviation for gauge. In addition, the oxygen concentration in the air was 21 vol% with respect to the entire volume of the air.

Note that, when the internal pressure of the packed column 20 reached 7 MPaG, the open/close valve 52 was closed, and the shut-off valve 65 and a flow rate control valve 64 were opened, whereby air supply was started from a supply port side of the packed column 20 (supply pipe 43 side). Air was supplied at a flow rate corresponding to O₂/COD(Cr) (oxygen amount in air/chemical oxygen demand) = 1.1 with respect to the COD(Cr) (chemical) oxygen demand of the wastewater to be treated. Note that G is an abbreviation for gauge.

Here, the COD(Cr) was measured with the COD analyzer DR3900 manufactured by HACH Japan KK. Specifically, the measurement was performed according to the following procedure. After 0.20 mL of the sample solution to be analyzed was added with a pipette to a vial of a COD decomposition reagent (manufactured by HACH Japan KK) and sufficiently mixed with each other, heating was performed at 150°C for 2 hours with the DRB200 reactor (manufactured by HACH Japan KK). After the liquid in the vial was sufficiently mixed, the COD(Cr) was calculated by colorimetric measurement with the DR3900 (manufactured by HACH Japan KK).

In addition, the COD(Cr) described below was measured by the same method.

For the packed column 20 after completing the pressure-boosting step, the first water-passing step of pure water was performed according to the following procedure.

### (2) First Water-Passing Step

In a state in which air supply was continued from the supply port side of the packed column 20 under the same conditions as those in a pressure-boosting step (O₂/COD(Cr) (oxygen amount in air/chemical oxygen demand) = 1.1), supply of pure water (COD(Cr) ≤ 1 mg/L) was started from the supply port side of the packed column 20 at a flow rate of 4 m³/h (LHSV 2.0 hr⁻¹) with a pump 48. The pure water was caused to pass until the interior of the packed column 20 was filled with the pure water and the pure water passed through the discharge pipe 30 (treated water discharge line). Note that, the required time from the start of supply of the pure water until the interior of the packed column 20 was filled with the pure water and the pure water passed through the discharge pipe 30 was 40 minutes. In addition, during the first water-passing step, the pressure inside the packed column 20 was about 7 MPaG.

For the packed column 20 after completion of the first water-passing step, a temperature-increasing step was performed according to the following procedure.

### (3) Temperature-Increasing Step

With a first heater (heat exchanger) 49 and a second heater 80, the pure water and the packed column 20 were heated in a state in which the pure water passed through the discharge pipe 30 (treated water discharge line), and the highest temperature inside the packed column was adjusted to become 250°C. Note that, during the temperature-increasing step, the pressure inside the packed column 20 was about 7 MPaG.

After the temperature near the supply port of the packed column 20 reached 240°C in the temperature-increasing step and confirmation was made with a temperature sensor, the second water-passing step was performed according to the following procedure.

### (4) Second Water-Passing Step

The liquid to be supplied from the pump 48 was switched from pure water to wastewater (COD(Cr) = 40000 mg/L). More specifically, the wastewater sent from a second pipe 45 (wastewater supply line) was pressure-boosted by the pump 48, and the supply was started from the supply port side of the packed column 20. The LHSV of the wastewater in the catalyst layer 22 was 2.0 hr⁻¹. Note that, during the second water-passing step, the pressure inside the packed column 20 was about 7 MPaG.

The treatment apparatus was started by the method described above. In addition, the wet oxidation treatment was continued by the following method.

### (5) Wastewater Treatment Step

As in the second water-passing step, the wastewater sent from the second pipe 45 (wastewater supply line) was pressure-boosted by the pump and supplied from the supply port side of the packed column 20. The LHSV of the wastewater in the catalyst layer 22 was 2.0 hr⁻¹. The wastewater was supplied for 1000 hours from the start to the end. The treated liquid after the wet oxidation treatment was cooled with a cooler 31 after passing through the discharge pipe 30 (treated liquid line), and then subjected to gas-liquid separation treatment by a gas-liquid separator 32. In the gas-liquid separator 32, the liquid level was detected with a liquid level controller (LC) and a liquid level control valve 36 was actuated to maintain a constant liquid level, and the pressure was detected with the pressure controller (PC) and the pressure control valve 35 was operated to maintain a pressure of about 7 MPaG. Thereafter, the treated liquid was discharged from a fourth pipe 34 (treated liquid discharge line).

Measurement of the COD(Cr) in the treated liquid discharged 1000 hours after the start of the treatment was performed for the treated liquid obtained by the above method. The results are shown in Table 1.

In addition, the COD(Cr) treatment ratio of the treated liquid discharged after 1000 hours was calculated by using the following equation. In the equation, "COD(Cr) of wastewater" is the COD(Cr) of the wastewater before being subjected to the treatment by the method described above. The obtained results are shown in Table 1.$COD \left(Cr\right) treatment ratio \left[%\right] = \frac{COD \left(Cr\right) of wastewater - COD \left(Cr\right) of treated liquid}{COD \left(Cr\right) of wastewater} \times 100$

### Test Example 2

Except that pressure-boosting to 7 MPaG was performed in the above-described pressure-boosting step by supplying the oxygen-containing gas from the supply port side of the packed column 20 for 120 minutes, the wastewater treatment test was conducted in the same manner as that in Test Example 1. The obtained results are shown in Table 1.

### Test Example 3

Except that the procedure was performed in the order of the first water-passing step, the pressure-boosting step, the temperature-increasing step, and the second water-passing step, the wastewater treatment test was conducted in the same manner as that in Test Example 2. The obtained results are shown in Table 1.

### Test Example 4

Except that the procedure was performed in the order of the pressure-boosting step, the temperature-increasing step, the first water-passing step, and the second water-passing step, the wastewater treatment test was conducted in the same manner as that in Test Example 1. The obtained results are shown in Table 1. Note that the temperature-increasing step in Test Example 4 was performed in a state in which pure water did not exist in the packed column 20.

### Test Example 5

Except that the procedure was performed in the order of the pressure-boosting step, the first water-passing step, the second water-passing step, and the temperature-increasing step, the wastewater treatment test was conducted in the same manner as that in Test Example 1. The obtained results are shown in Table 1.

**[Table 1]**

| Operation procedure | Test Example 1 | Test Example 2 | Test Example 3 | Test Example 4 | Test Example 5 |
|---|---|---|---|---|---|
| 1st | Pressure-boosting step (supply from discharge port) | Pressure-boosting step (supply from supply port) | First water-passing step | Pressure-boosting step (supply from discharge port) | Pressure-boosting step (supply from discharge port) |
| 2nd | First water-passing step | First water-passing step | Pressure-boosting step (supply from supply port) | Temperature-increasing step | First water-passing step |
| 3rd | Temperature-increasing step | Temperature-increasing step | Temperature-increasing step | First water-passing step | Second water-passing step and wastewater treatment step |
| 4th | Second water-passing step and wastewater treatment step | Second water-passing step and wastewater treatment step | Second water-passing step and wastewater treatment step | Second water-passing step and wastewater treatment step | Temperature-increasing step |
| COD(Cr) (mg/L) | 600 | 2400 | 5100 | 15000 | 15000 |
| COD(Cr) treatment ratio (%) | 98 | 92 | 83 | 50 | 50 |

As shown in Table 1, the results of Test Examples 1 to 5 showed that the COD(Cr) of the treated liquid discharged 1000 hours after the start of the treatment was sufficiently reduced, and the treatment capacity of the wastewater treatment was maintained. In addition, compared with Test Examples 2 to 5, the results of Test Example 1 were favorable in both the treated water COD(Cr) (mg/L) and the COD(Cr) treatment ratio (%), and in particular, a result was obtained in which the treatment capacity for wastewater was maintained.

### Reference Signs List

10 Treatment apparatus
20 Packed column
21 Solid catalyst
22 Catalyst layer
23 Packing layer
24 Packing layer
30 Discharge pipe
31 Cooler
32 Gas-liquid separator
33 Third pipe
34 Fourth pipe
35 Pressure control valve
36 Liquid level control valve
40 Liquid supply unit
41 First liquid
42 Second liquid
43 Supply pipe
44 First pipe
45 Second pipe
46 First open/close valve
47 Second open/close valve
48 Pump
49 First heater
50 Pressure-boosting gas supply unit
51 Seventh pipe
52 Open/close valve
60 Gas supply unit
61 Compressor
62 Fifth pipe
63 Sixth pipe
64 Flow rate control valve
65 Shut-off valve
70 Switching unit
80 Second heater
LC Liquid level controller
PT Temperature controller

## Claims

1. A treatment apparatus comprising:
a packed column including a catalyst layer packed with a solid catalyst;
a discharge pipe connected to an upper position relative to the catalyst layer; and
a liquid supply unit located at a lower position relative to the catalyst layer and configured to supply either a first liquid or a second liquid having a greater COD(Cr) than the first liquid.

2. The treatment apparatus according to claim 1, further comprising:
a pressure-boosting gas supply unit configured to supply, to the packed column, a pressure-boosting gas for increasing an internal pressure of the packed column, wherein
the pressure-boosting gas supply unit supplies the pressure-boosting gas to an upper position relative to the catalyst layer through the discharge pipe.

3. The treatment apparatus according to claim 2, further comprising:
a gas supply unit configured to supply an oxygen-containing gas to a lower position relative to the catalyst layer; and
a switching unit configured to switch between supplying the pressure-boosting gas to the upper position relative to the catalyst layer by the pressure-boosting gas supply unit and supplying the oxygen-containing gas to the lower position relative to the catalyst layer by the gas supply unit.

4. The treatment apparatus according to claim 3, wherein the liquid supply unit supplies either the first liquid or the second liquid in a state with the oxygen-containing gas being supplied by the gas supply unit.

5. The treatment apparatus according to claim 3 or 4, wherein the pressure-boosting gas supply unit supplies the same oxygen-containing gas as the oxygen-containing gas supplied by the gas supply unit as the pressure-boosting gas to the packed column.

6. The treatment apparatus according to any one of claims 1 to 5, wherein the solid catalyst contains at least one selected from the group consisting of:
one or more selected from the group consisting of titanium, iron, aluminum, silicon, and zirconium, or
one or more selected from the group consisting of an oxide of any of titanium, iron, aluminum, silicon, and zirconium, a composite oxide of any of titanium, iron, aluminum, silicon, and zirconium;
and
one or more selected from the group consisting of activated carbons.

7. The treatment apparatus according to any one of claims 1 to 6, wherein the treatment apparatus is used for wet oxidation treatment.

8. A method for starting or restarting a treatment apparatus including a packed column including a catalyst layer packed with a solid catalyst, the method comprising:
first water-passing of supplying a first liquid to a lower position relative to the catalyst layer and causing the first liquid to pass through a discharge pipe connected to an upper position relative to the catalyst layer; and
after the first water-passing, second water-passing of supplying a second liquid having a greater COD(Cr) than the first liquid to a lower position relative to the catalyst layer.

9. The method for starting or restarting a treatment apparatus, according to claim 8, further comprising:
before the first water-passing, pressure-boosting of supplying a pressure-boosting gas to an upper position relative to the catalyst layer through the discharge pipe and increasing an internal pressure of the packed column.

10. The method for starting or restarting a treatment apparatus, according to claim 9, wherein, in the pressure-boosting, after the internal pressure of the packed column reaching a set pressure (P) by supplying the pressure-boosting gas to the upper position relative to the catalyst layer, switching to supplying an oxygen-containing gas to a lower position relative to the catalyst layer is performed.

11. The method for starting or restarting a treatment apparatus, according to claim 10, wherein
in the first water-passing, the first liquid is supplied in a state with the oxygen-containing gas being supplied to a lower position relative to the catalyst layer, and
in the second water-passing, the second liquid is supplied in a state with the oxygen-containing gas being supplied to the lower position relative to the catalyst layer.

12. The method for starting or restarting a treatment apparatus, according to claim 10 or 11, wherein, in the pressure-boosting, the same oxygen-containing gas as the oxygen-containing gas is supplied as the pressure-boosting gas to the packed column.

13. The method for starting or restarting a treatment apparatus, according to any one of claims 8 to 12, further comprising:
after the first water-passing and before the second water-passing, temperature-increasing of heating the packed column in a state with the first liquid passing through the discharge pipe.

14. The method for starting or restarting a treatment apparatus, according to any one of claims 8 to 13, wherein the solid catalyst contains at least one selected from the group consisting of: one or more selected from the group consisting of titanium, iron, aluminum, silicon, and zirconium, or one or more selected from the group consisting of an oxide of any of titanium, iron, aluminum, silicon, and zirconium, a composite oxide of any of titanium, iron, aluminum, silicon, and zirconium; and one or more selected from the group consisting of activated carbons.

15. The method for starting or restarting a treatment apparatus, according to any one of claims 8 to **14,** wherein the method is used for wet oxidation treatment.
